# EUROPEAN PATENT SPECIFICATION

(11) **EP 2 195 759 B1**
(45) Date of publication and mention of the grant of the patent: **03.06.2015**
(21) Application number: 08836309.8
(22) Date of filing: 01.10.2008
(51) Int. Cl.: G06F 21/10, H04L 29/06

(54) **CONCEPT FOR A KEY MANAGEMENT IN A DRM SYSTEM**
KONZEPT FÜR EIN SCHLÜSSELMANAGEMENT IN EINEM DRM-SYSTEM
CONCEPT POUR UNE GESTION DE CLÉ DANS UN SYSTÈME DRM

(30) Priority: 02.10.2007 US 976912 P
(43) Date of publication of application: 16.06.2010
(73) Proprietor: Fraunhofer-Gesellschaft zur Förderung der angewandten Forschung e.V., 80686 München (DE)
(72) Inventor: GREEVENBOSCH, Bert, 91052 Erlangen (DE); FUCHS, Harald, 91341 Röttenbach (DE); JOAN, Mercé Serra, 91056 Erlangen (DE); KRÄGELOH, Stefan, 91056 Erlangen (DE); ARNAB, Alapan, 3610 Paradise Valley (ZA); BECKER, Anja, 60322 Frankfurt (DE)
(74) Representative: Zinkler, Franz
(86) International application number: PCT/EP2008/008323
(87) International publication number: WO 2009/043576

(56) References cited:
- EP-A- 1 638 292
- PAUL KOSTER ET AL: "Introduction of the Domain Issuer in OMA DRM" 1 January 2007 (2007-01-01), CONSUMER COMMUNICATIONS AND NETWORKING CONFERENCE, 2007. CCNC 2007. 20 07 4TH IEEE, IEEE, PI, PAGE(S) 940 - 944 , XP031087921 ISBN: 978-1-4244-0667-8 page 942, right-hand column, paragraph C.4 - page 943, left-hand column
- OMA STANDARD: "OMA-TS-DRM-DRM-V2_1-20061128-D - DRM Specification - Draft Version 2.1 28 November 2006" [Online] 28 November 2006 (2006-11-28), OMA STANDARD,, PAGE(S) 1 - 204 , XP002490257 Retrieved from the Internet: URL:http://member.openmobilealliance.org/f tp/Public_documents/DRM/2006/OM A-DLDRM-2006-0510R01-INP_Update_of_DRMv2.1 _docs.zip> [retrieved on 2008-07-28] the whole document

## Description

The present invention generally relates to digital rights management and, more particularly, to a concept for managing cryptographic keys in such a DRM system, particularly for managing keys for a local rights manager (LRM) being responsible for aspects of data import.

Digital rights management (DRM) describes a concept by which media providers enforce limitations on usage and distribution of digital media content. Presently, there are number of DRM schemes in use. For example, mobile content providers use the Open Mobile Alliance (OMA) DRM system to protect digital mobile media content.

The OMA DRM family comprises digital rights management standards that are developed by the Open Mobile Alliance. To date, the OMA DRM family comprises:
- OMA Digital Rights Management 1.0 (DRM v1.0),
- OMA Digital Rights Management 2.0 (DRM v2.0),
- OMA Digital Rights Management 2.1 (DRM v2.1),
- OMA DRM v2.0 Extensions for Broadcast Support (XBS),
- OMA Secure Removable Media (SRM),
- OMA Secure Content Exchange (SCE).

The OMA DRM system enables content issuers to distribute DRM protected content and rights issuers (RIs) to issue rights objects (ROs) for the DRM protected content. The DRM system is independent of media object formats, operating systems, and run-time environments. Contents protected by DRM can be of a wide variety, including games, ring tones, photos, music clips, video clips, streaming media, etc. For a user consumption of the content, users acquire permission to DRM protected content by contacting rights issuers, i.e. an entity that issues rights objects to DRM conformant devices. Rights issuers grant appropriate permission for the DRM protected content to use it on DRM conformant devices. The content is cryptographically protected when distributed and, hence, will not be usable without an associated rights object (RO) issued for the user's device.

A user may also wish to operate the digital media content on other DRM conformant devices owned by him. Therefore, according to SCE, a concept of a "user domain" was introduced. A user domain may include other DRM conformant devices owned, operated, controlled, or under responsibility of the user. The user may add devices to the user domain and may use a certain device in the user domain to obtain digital media content usable in the user domain. Further, the user may share content between DRM conformant devices in the user domain via network connectivity or via a storage memory suitable for transferring content between DRM conformant devices. Thus, a user domain refers to a group of DRM conformant devices that may share DRM protected content. A content provider may allow replication and use of content among devices in the user's user domain. Further, the content provider may limit and/or prohibit distribution and use of such content to devices outside the user domain.

One of the biggest criticisms in current digital rights management systems is the lack of interoperability between competing systems. The Open Mobile Alliance would like to address this problem through the use of a trusted device in the user's control called local rights manager (LRM). The LRM will have the functionality to convert non-OMA protected content to OMA DRM protected content for a user domain or for devices outside the user domain. This process will consist of two parts, namely the conversion of the protected data format (if required) and the conversion of the used license format.

DRM interoperability is an open challenge in the DRM community. Many academic solutions like Heileman, G. L. and Jamkhedkar, P. A.: "DRM interoperability analysis from the perspective of a layered framework", Proceedings of the fifth ACM Workshop on Digital Rights Management, Co-Located with ACM CCS 2005 (2005), R. Safavi-Naini and M. Yung, Eds., ACM, pp. 17 - 26 and Jamkhedkar, P. A. and Heileman, G. L.: "DRM as a Layered System", Proceedings of the Fourth ACM Workshop on Digital Rights Management, Co-Located with ACM CCS 2004 (2004), A. Kiayias and M. Yung, Eds., ACM, pp. 11 - 21 are focused on the entire architecture required to support interoperable DRM. But, as discussed by Koenen, R. H., Lacy, J., Mackay, M., and Mitchell, S.: "The long march to interoperable digital rights management", Proceedings of the IEEE 92, 6 (2004), 883 - 897 and by Schmidt, A. U., Tafreschi, O., and Wolf, R.: "Interoperability challenges for DRM systems", IFIP/GI Workshop on Virtual Goods (2004), there is another form of interoperability that can be achieved in short term: Connected interoperability (also called intermediated DRM). In connected interoperability, a trusted third party is used to convert between two rival formats. The LRM in OMA DRM proposes to allow this form interoperability.

Currently, the Coral Consortium is the main proponent of a service that is based on this principle. In their scheme (which is very similar to the scheme proposed by Schmidt et al.), users first upload protected content and use licenses (ROs) to their servers, then these files are converted to the target DRM system format, finally the user can download the converted data. The LRM in OMA DRM is different, in that it is a trusted device within the user's control. For this reason, associated cryptographic key management systems required are more complex and those used by the Coral Consortium are not applicable.

Currently, OMA DRM v2.0/v2.1 allow users to group their devices to form user domains. RIs have the capability to admit new devices to the user domain and allow devices to leave the user domain. A RI can issue ROs to access protected content for a user domain, such that any device in that user domain can access the media content associated to the RO.

In SCE, user domain management is done by an entity called domain enforcement agent (DEA) for enforcing certain domain policies. The DEA may also be referred to as domain authority (DA) in other specifications or older versions of the SCE-specification. Hence, the terms DEA/DA may be used interchangeably. A RI can issue ROs for OMA DRM content to any user domain managed by the DEA. The LRM is proposed to work in conjunction with a user domain for the import of non-OMA DRM content and is restricted to that particular user domain, i.e., it cannot provide imported content to other user domains. The import function works first to converting non-OMA DRM data into OMA DRM data. For example, a device conformant to OMA DRM may attempt to play non-OMA DRM data. In this case, the non-OMA DRM data should be converted or imported into OMA DRM data by a LRM according to the OMA SCE requirements. Thus, the LRM imports the non-OMA DRM data into DRM content format (DCF) and imports a RO for the OMA DRM, which are called imported DCF and imported RO, respectively. Imported DCF and imported RO, which support OMA DRM, can be used by a DRM agent in a device compatible with OMA DRM according to OMA SCE requirements. In the sequel of this specification, ROs generated or converted by a LRM shall be denoted as LRM-ROs. These are similar to RI-generated ROs, except for some LRM-specific properties.

In both OMA DRM v2.0/v2.1 and SCE, a content encryption key (CEK) may usually not be transmitted unencrypted from the RI to a DRM conformant device, since it may be revealed and used by other devices not possessing a related digital rights object. The CEK hence has to be transferred from the RI to the DRM conformant device in an encrypted manner. The OMA DRM specifications use public key methods for this reason. For a RO meant to be used on one single DRM conformant device, the OMA DRM method works in the following way:
The DRM conformant device has attached to it a device certificate which binds a device ID to a public encryption key (a pair (m,e) of natural numbers). A corresponding private en-/decryption key d (also a natural number) is only known to the DRM conformant device.
The RI checks the device certificate and generates a rights encryption key (REK), a message authentication code key (MK) and a random number Z in the range between 0 and m-1. The key MK is used to protect the rights object of changes.
The RI generates a key encryption key (KEK) by means of a hash function of Z. Z is encrypted to first encrypted information C1 by means of the public key (m,e). Further, a concatenation of REK and MK is encrypted to second encrypted information C2 by means of KEK. Further, CEK is encrypted to third encrypted information C3 by means of REK. CEK is that cryptographic key with which data content of associated digital media is encrypted. Finally, the RO comprising the encrypted data C1, C2 and C3 is sent from the RI to the DRM conformant device.

Encrypted media content in a digital media object is typically not obtained from the RI, but via a different communication channel. The DRM conformant device now has access to an encrypted digital media object and an associated digital rights object with the cryptographic data C1, C2 and C3. In order to be able to decrypt the encrypted media content, the DRM conformant device performs the following steps:
Firstly, Z is decrypted by means of C1 and the DRM conformant device's private key d. Then, the key encryption key KEK is derived from Z in the same way as it has been described above for the RI. By means of the derived KEK, the DRM conformant device decrypts the cryptographic keys REK and MK. By means of MK, the DRM conformant device may verify, whether the rights object has remained unchanged. By means of the rights encryption key REK, the DRM conformant device may decrypt the content encryption key CEK. Finally, knowing CEK, the DRM conformant device may now decrypt and replay the encrypted digital media content.

Since the LRM is under the user's control there is a chance that it could be compromised, e.g. by way of a cryptographic attack.

Once a compromised LRM is detected it would be desirable to minimize the amount of legitimate LRM-ROs that the LRM can generate for OMA DRM systems. However, legitimate LRM-ROs that were produced by the LRM before the compromise was detected should not be rejected by devices in the user domain as being illegitimate.

Also, a compromised LRM should not lead to a compromise of legitimate protected content available to the user domain to which the LRM is attached to. Thus, in the event of a compromise of the LRM, it should be possible to isolate the LRM from the user domain without affecting the normal operation of the other devices in the user domain.

Further, the LRM should possess most of the functionalities offered by a normal RI. Functionalities such as free movement of protected content and licenses (ROs) in the user domain, and the backup of protected content and licenses should also further be possible.

Yet further, it should be possible for the LRM to have limited functionality without a connection to an external network entity. For example, the LRM could be in an area without consistent access to the internet.

Paul Koster et al.: "Introduction of the Domain Issuer in OMA DRM" 1 January 2007 (2007-01-01), Consumer Communications and Networking Conference, 2007. CCNC 2007. 20 07 4th IEEE, IEEE, Pl, page(s) 940-944 describes the introduction of a domain issuer (DI) in an OMA-DRM. Here, a rights issuer (RI) identifies a domain and an associated domain issuer (DI). The DI creates a diversified domain key (KDi) for this domain and distributes it to the RI. The DI also generates a RI validation token (VT) and distributes this to the RI. The validation token (VT) is renewed periodically by the DI. For this reason, a validation token VTi comprises an expiry date (ExpiresAfter) and a RIi PublicKey. Before issuing a VT, the DI checks that the RI is still compliant and has an agreement with the DI. An RI is disallowed from using the domain by stopping the distribution of new validation tokens. If the DI does not trust a RI, the DI can create and distribute a new generation of the domain key (KD) to all domain authorities (DA) in the domain and issue new diversified domain keys (KDi) to all the RIs except the non-trusted RI.

EP 1 638 292 A1 deals with how to distribute so-called "stateful" rights objects among user devices of a domain. Stateful rights objects have a replay state that changes after a replay of a digital content. For example, a rights object can allow a certain piece of content to be played three times. In this case, the state is the number of plays left. According to EP 1 638 292 Al, for the distribution of stateful rights objects, a trusted module of a mobile terminal (comprising a DRM user agent) is operable to effectively issue to each of other devices in the domain a subset of the rights contained in the (stateful) rights object, so that the content obtained from the content provider may be used by the devices in the domain as a whole in accordance with the (stateful) rights object. That is, if the rights object license specifies that a music recording can be reproduced e.g. 10 times, each time the trusted module issues a subset of the rights object to a device in the domain, that use will be deducted from the remaining rights available in accordance with the (stateful) rights object. Therefore, the recorded music may, e.g., be reproduced only 10 times in total irrespective of which or how many of the devices in the domain perform each of those reproductions.

According to the present invention, it is the object to overcome the above-mentioned problems. These are solved by devices and methods according to the independent claims.

According to some aspects of the present invention, computer programs are provided for executing the steps of the provided inventive methods.

The present invention is based on the finding, that the above-mentioned objectives may be solved by a cryptographic key management concept for a user domain, in which the LRM is provided a cryptographic generation key for validly generating or converting only a limited amount of rights objects. In case a compromise of the LRM is detected, the cryptographic generation key is not renewed after the limited amount of ROs have been generated by the LRM. Otherwise, i.e. in case no compromise of the LRM has been detected, i.e. in case the LRM may be considered trustable, the LRM is provided a new (different) cryptographic generation key for generating a further limited amount of rights objects.

For the provision of the cryptographic generation key embodiments of the present invention provide a domain enforcement agent entity (DA) for issuing a domain policy for a domain managed by the domain enforcement agent (DEA), the domain comprising a plurality of DRM conformant devices and a local rights managing entity (LRM) for importing digital media contents and/or rights object related to said digital media content into the domain. The domain enforcement agent entity comprises means for deciding whether the local rights managing entity can be considered trustable, and means for providing, in case a decision yields that the local rights managing entity can be considered trustable, a cryptographic generation key to the local rights managing entity, the cryptographic generation key enabling the local rights managing entity to generate a limited amount of rights objects.

According to a further aspect, there is provided a local rights managing entity (LRM) for importing digital media content and/or rights objects related to said digital media content and for converting the imported digital media content and/or rights objects to comply with a specific DRM-system. The local rights managing entity comprises a device for generating a rights object based on a variable cryptographic key. The variable cryptographic key is dependent on a cryptographic generation key provided to the local rights managing entity by a domain enforcement agent entity and on an indicator for indicating how many rights objects have been generated by the local rights managing entity using said cryptographic generation key. The cryptographic generation key enables the local rights managing entity to generate only a limited amount of rights objects and has to be renewed if the local rights managing entity shall be allowed to generate a further limited amount of rights objects.

Yet further, there is provided a DRM conformant device for replaying digital media content related to a received rights object from a local rights managing entity (LRM), the rights object comprising verification information including an indicator for indicating how many rights objects have been generated by the local rights managing entity using a specific cryptographic generation key. The DRM conformant device comprises means for verifying the verification information comprised by the rights object. and means for signaling that the local rights managing entity is not trustable, in case the verification information is identical to a previously received verification information related to a previously received rights object. Likewise, it is signaled that the local rights managing entity is not trustable, in case the indicator indicates that more than a limited amount of rights objects have been generated by the local rights managing entity using the specific cryptographic generation key.

The inventive domain enforcement agent entity (DEA), the local rights managing entity (LRM) and the DRM conformant device may be part of an OMA DRM user domain. All the parties in the proposed scheme, the RI, the DEA, the LRM and the individual DRM conformant devices make use of public key cryptography and they have their own public/private key pairs. Every local rights managing entity (LRM) will have its own public/private key pair, possibly installed during its manufacture. The domain enforcement agent entity (DEA) will issue the LRM and the DRM conformant devices in the user domain with a LRM-specific user domain key (LRM-UDK) being different to the UDK issued by the DEA to access RI-generated ROs to user domains. If there are multiple LRMs in a user domain, the DEA issues a different LRM-UDK for each LRM. It shall be noted that the user domain key (UDK) or the LRM-specific user domain key (LRM-UDK) may also be called master domain key (MDK) or the LRM-specific master domain key (LRM-MDK), respectively, in other specifications. Hence, the terms LRM-UDK/LRM-MDK and UDK/MDK be used interchangeably, respectively.

The DEA will also issue the LRM with the cryptographic generation key (GK), which can be used by the LRM to generate at most N LRM-ROs, where N is a natural number. LRM-ROs generated with the same GK shall be called LRM-ROs from the same generation, i.e. from the generation of the GK. After the LRM has generated N LRM-ROs, a new generation has to be commenced and hence a new GK will be required for the LRM to further operate.

When the DEA generates a GK, it creates a protected tuple (LRM-ID, GK, N), wherein LRM-ID denotes a unique device identifier of the LRM, and delivers it to the LRM. A protection of the tuple consists of the encryption of GK using the LRM-specific user domain key LRM-UDK and the cryptographic signing of the complete tuple (LRM-ID, GK, N) with the DEA's private key. The LRM-ID and N need not necessarily be encrypted.

Each rights object generated by the LRM, i.e. each LRM-RO, contains a valid and unique tuple (LRM-ID, GK, n) (e.g. n = 1, 2, ..., N) in case the LRM has not been compromised.

In order to protect the REK that is enclosed in a newly generated LRM-RO, the LRM generates a variable diversified domain key (DDK) denoted by LRM-DDK_{GK,n} and uses that as a variable encryption key for the LRM-RO. The LRM-DDK_{GK,n} used for the n-th LRM-RO in the generation of the GK is calculated by some one-way function f of the LRM-UDK, GK and n, i.e. LRM-DDK_{GK,n} = f (LRM-UDK, GK, n). Thereby a one-way function means a function that is relatively easy to compute but impossible or very hard to invert.

A generated LRM-RO also contains a variable n representing the round of the GK's use. The variable n may be a non-negative integer, e.g. such that 0 ≤ n < N or 0 < n ≤ N. Each LRM-RO should be based on a unique (GK, n) pair. Further, the LRM may sign all LRM-ROs it generates using its private key.

A DRM conformant device that can render LRM-generated content is adapted to ensure that there are not installed two different LRM-ROs with the same (LRM-ID, GK, n) tuple and that 0 ≤ n < N or 0 < n ≤ N. Otherwise the DRM conformant device may inform the DEA about a possible compromise of the LRM.

If the DEA wants to revoke a LRM, it may not send out any new GKs for that LRM, thereby limiting the number of legitimate LRM-ROs the LRM can still generate after the revocation. I.e., once an LRM is revoked, it can at most generate m more legitimate ROs, wherein m is the number of non-used (GK, n) pairs at the time of the revocation. However, legitimate content created by the compromised LRM before its compromise has been disclosed, is not affected.

Preferred embodiments of the present invention are described in the following with reference to the accompanying drawings, in which:
- Fig. 1: shows a schematic diagram of a domain enforcement agent entity according to an embodiment of the present invention;
- Fig. 2: shows a flow chart of a method for a cryptographic key management method according to an embodiment of the present invention;
- Fig. 3: shows a schematic block diagram of a local rights managing entity according to an embodiment of the present invention;
- Fig. 4: shows a schematic block diagram of a DRM conformant device according to an embodiment of the present invention;
- Fig. 5: shows a flow chart of a method executed of the DRM conformant device according to Fig. 4; and
- Fig. 6: shows a schematic user domain comprising a domain enforcement agent entity, a local rights managing entity and a DRM conformant device according to an embodiment of the present invention.

The following description sets forth specific details, such as particular embodiments, procedures, techniques, etc. for purposes of explanation and not limitation. But it will be appreciated by one skilled in the art that other embodiments may be employed apart from these specific details. For example, although the following description is facilitated using non-limiting example applications to different OMA DRM embodiments, the technology may be employed to any type of DRM system. In some instances, detailed descriptions of well-known methods, interfaces, circuits, and devices are omitted so as not to obscure the description with unnecessary details. Moreover, individual blocks are shown in some of figures. Those skilled in the art will appreciate that the functions of those blocks may be implemented using individual hardware circuits, using software programs and data, in conjunction with a suitably programmed digital microprocessor or general purpose computer, using application-specific integrated circuitry (ASIC), and/or using one or more digital signal processors (DSPs).

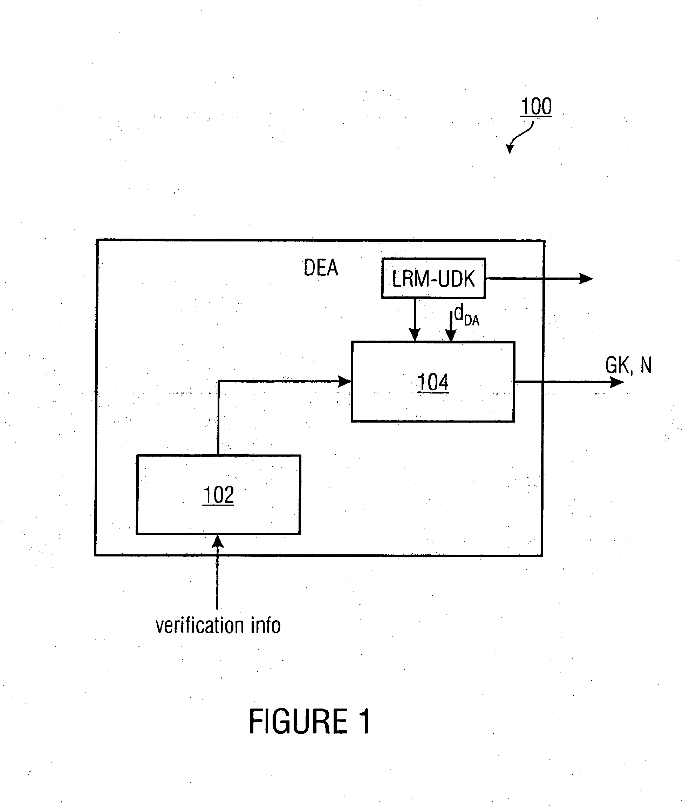

Fig. 1 schematically shows a domain enforcement agent entity (DEA) 100, which is used for issuing a domain policy for a DRM user domain comprising a plurality of DRM conformant devices and a local rights managing entity, wherein the local rights managing entity serves for importing digital media content and/or rights objects to the user domain.

DEA 100 comprises means 102 for deciding whether the local rights managing entity (LRM) can be considered trustable or trustworthy, and means 104 for providing, in case a decision yields that the LRM can be considered trustable, a cryptographic key GK to the LRM, wherein the cryptographic key GK enables the LRM to generate or convert a limited amount N of rights objects.

According to one aspect of the present invention, the decision formed by means of 102 is based on verification information delivered to the DEA 100 from a DRM conformant device of the user domain. However, the verification information may also stem from other sources, like for example the internet. In any case it provides information on which basis the DEA 100 may decide whether to deliver a new GK to the LRM the next time it request for it.

The means 102 for deciding hence may be coupled to a DRM conformant device belonging to the user domain in order to obtain the verification information from said DRM conformant device, wherein the verification information indicates that the LRM can or cannot be trusted. That is, the verification information input to the means 102 indicates whether the LRM has been compromised or not. Based on the verification information, means 102 may then decide, whether means 104 shall provide the LRM with a new GK or not.

The verification information delivered from DRM conformant devices attached to the DEA 100 may, according to one embodiment of the present invention, comprise an actual or present tuple (LRM-ID, GK, n), wherein n should fulfill 0 ≤ n < N or 0 < n ≤ N. Such a tuple may be delivered to the DEA from a DRM conformant device which has just received a LRM-RO comprising said tuple. The means 102 may compare the delivered verification information in form of the tuple (LRM-ID, GK, n) with stored, previously delivered verification information or tuples in order to check whether the presently delivered tuple (LRM-ID, GK, n) is identical to one of the stored tuples. In that case the means 102 may decide that the LRM has been compromised and hence is not trustable anymore. The same decision is made in case the indicator n does not fall in the interval 0 ≤ n < N or 0 < n ≤ N.

According to other embodiments, the above-described verification can also be performed within the DRM conformant devices themselves. In this case, a DRM conformant device just transmits the result of the verification to the DEA 100. If the DEA 100 receives a verification result from a DRM conformant device indicating that the LRM has been compromised, means 104 stops providing new cryptographic generation keys GK to the LRM.

However, in case it is decided that the LRM is trustable, means 104 generates a protected tuple (LRM-ID, GK, N) using the LRM-specific user domain key (LRM-UDK) and the DEA's private key. According to an embodiment of the present invention the protection of the tuple (LRM-ID, GK, N) consists of the encryption of the cryptographic generation key GK using the key LRM-UDK and signing of the complete tuple with the DEA's private key. The identifier LRM-ID and the limited amount N need not be encrypted.

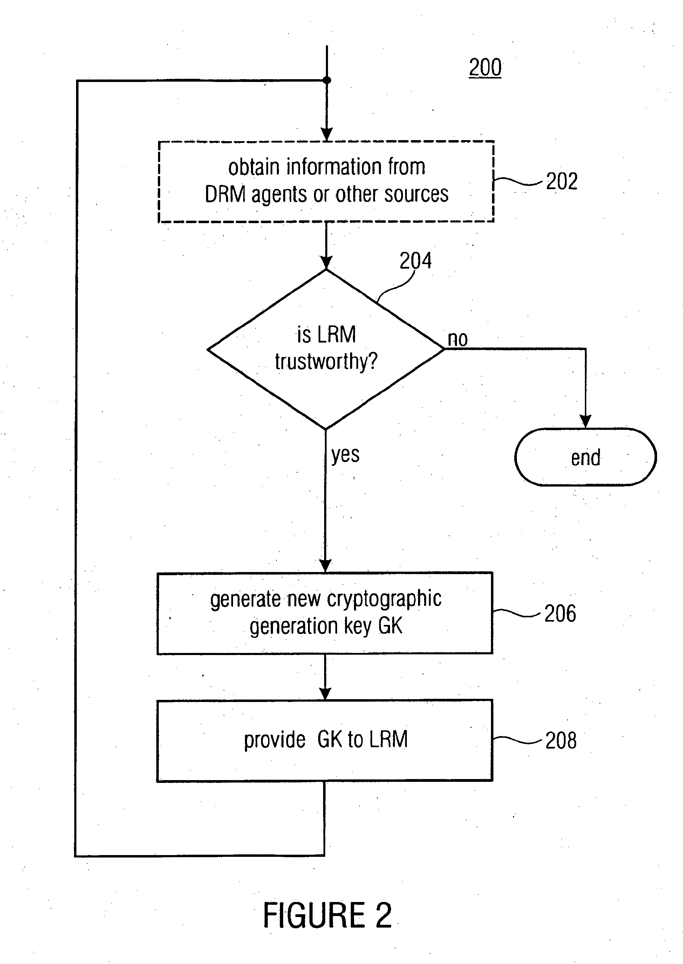

Turning now to Fig. 2, a method 200 carried out by the DEA 100 shall be summarized.

In a first step 202 the DEA 100 obtains verification information from attached DRM agents of the user domain or from other sources, like for example information from the internet. Step 202 may be considered optional, since also no information may be provided to the DEA 100 in case the LRM has not been attacked or compromised. Based on the obtained information (wherein the information may also be no information) means 102 decides in a step 202, whether the LRM is trustable or not. In case the decision yields that the LRM is not trustable, no new generation key GK is provided to the LRM. In the other case, i.e. decision 204 yields that the LRM is trustable, method 200 proceeds with a step 206 of generating a new cryptographic generation key GK for the LRM. After GK has been generated and secured as has been described before, it is provided to the LRM in step 208 together with N indicating the amount of LRM-ROs that may be generated by the LRM. Thereby, all communication between different parties of the user domain may be done on the basis of adequate data communication protocols. I.e., the LRM may send a request for obtaining a new GK to the DEA 100. In response to that request the DEA 100 may send a message to the LRM, the message comprising a new GK, in case the LRM is still trustworthy.

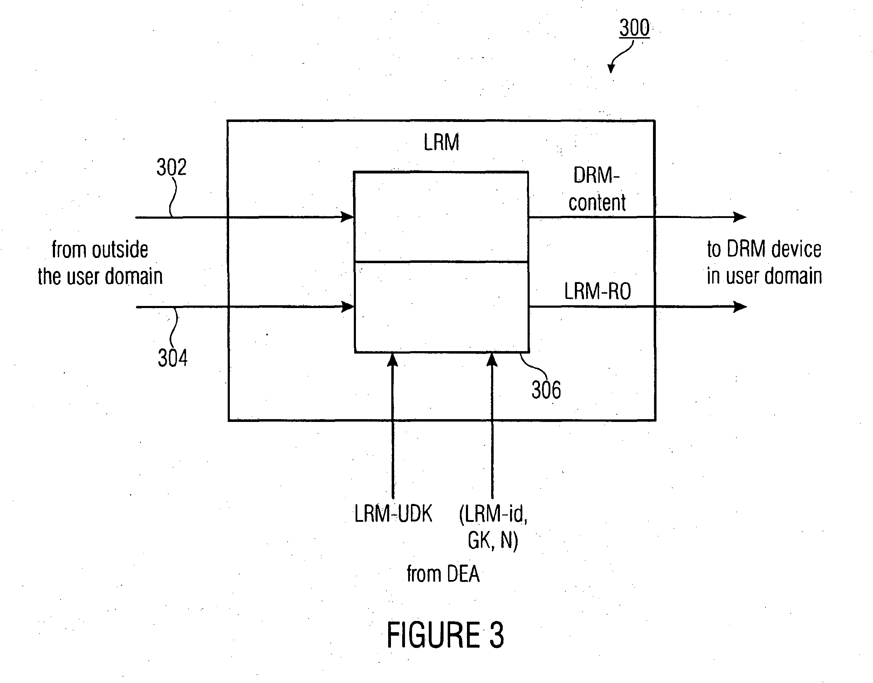

Turning now to Fig. 3, a local rights managing entity (LRM) 300 shall be explained in more detail.

As explained before, LRM 300 serves as a trusted device under the control of the user in the domain. The LRM 300 has the functionality to convert non-OMA protected digital media content to OMA DRM protected digital media content. Therefore it is adapted to receive non-OMA protected digital media content 302 and/or non-OMA licenses 304 from sources outside the user's domain. A device 306 is used for generating an OMA-conformant RO based on a variable cryptographic key LRM-DDK_{GK,n} being dependent on the cryptographic generation key GK provided to the LRM 300 and based on an indicator n for indicating how many ROs have been generated by the LRM 300 using said provided cryptographic key GK. Of course, the LRM-RO may only be generated also on the basis of the content of the imported non-OMA license 304 containing the CEK for the associated, imported digital media content.

Once the LRM 300 has generated a RO, i.e. a LRM-RO, it is transferred (together with the converted DRM content) to the DRM devices of the user domain.

According to an embodiment, the device 306 for generating is adapted to determine the variable cryptographic key LRM-DDK_{GK,n} which is used for the n-th LRM-RO in the generation of the GK, on the basis of a one-way function f. The one-way function f is dependent on the provided cryptographic key GK, the indicator n (0 ≤ n < N or 0 < n ≤ N) and a (public) LRM-specific user domain key LRM-UDK, i.e., LRM-DDK_{GK,n} = f (LRM-UDK, GK, n). The variable key LRM-DDK_{GK,n} is used to protect the REK that is enclosed in the newly generated LRM-RO, wherein the REK in turn protects the CEK of the associated, imported digital media content.

Further, the device 306 for generating is adapted to cryptographically sign the generated LRM-RO by using the LRM's private key before sending the generated or converted LRM-RO to a DRM conformant device of the user domain.

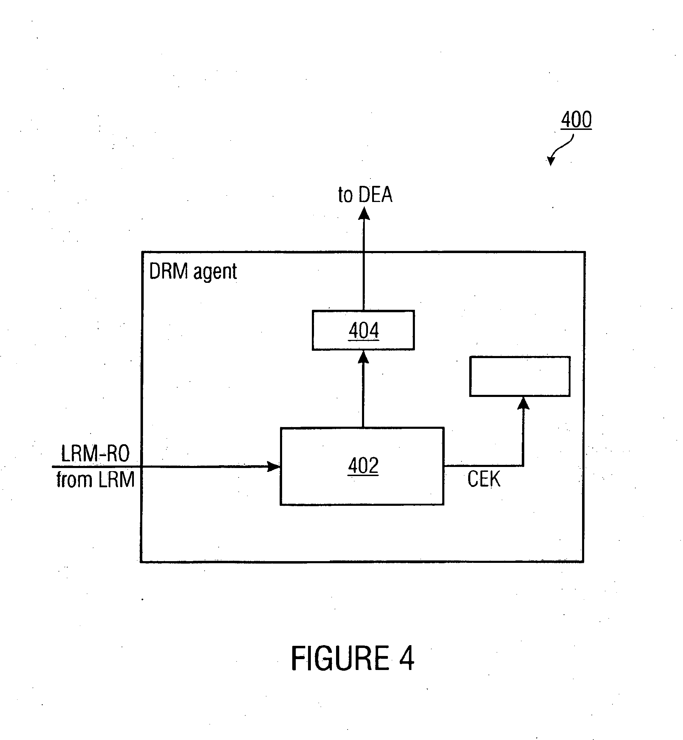

Turning now to Fig. 4, a third component of a DRM user domain shall be described, namely a DRM conformant device 400 according to an embodiment of the present invention.

The DRM conformant device 400 typically comprises a so-called DRM agent possibly in form of a piece of software. The DRM conformant device 400 may be used for replaying digital media content related to a LRM-RO received from the LRM 300. As explained before, the LRM-RO comprises information, in form of a tuple (LMR-ID, GK, n), on how many LRM-ROs the LRM 300 has already generated using a specific cryptographic key GK, GK enabling the LRM to generate a limited amount N of LRM-ROs. The DRM conformant device 400 comprises means 402 for verifying the information of the LRM-RO and means 404 for signaling that the LRM 300 is not trustable, in case the indicator n is greater than the limited amount N of LRM-ROs or, in case the tuple (LMR-ID, GK, n) is identical to the tuple of a previously received LRM-RO.

For that purpose the DRM conformant device 400 needs to have knowledge on the limited amount N related to GK. One possibility is to get this knowledge directly from the DEA 100. Another possibility is to encapsulate the limited amount N into the LRM-RO, thereby reducing signaling traffic in the user domain. A third alternative is to have N as a fixed system parameter.

In case the verification performed by means 402 yields that the LRM 300 is not trustable, means 402 may trigger means 404 to transmit an information signal to the DEA 100, the signal indicating that the LRM 300 has been compromised. In case the verification of the tuple (LMR-ID, GK, n) comprised by the received LRM-RO does not indicate a compromise of the LRM 300, the LRM-RO may be decrypted by means 402 in order to obtain the CEK for replaying the attached DRM content.

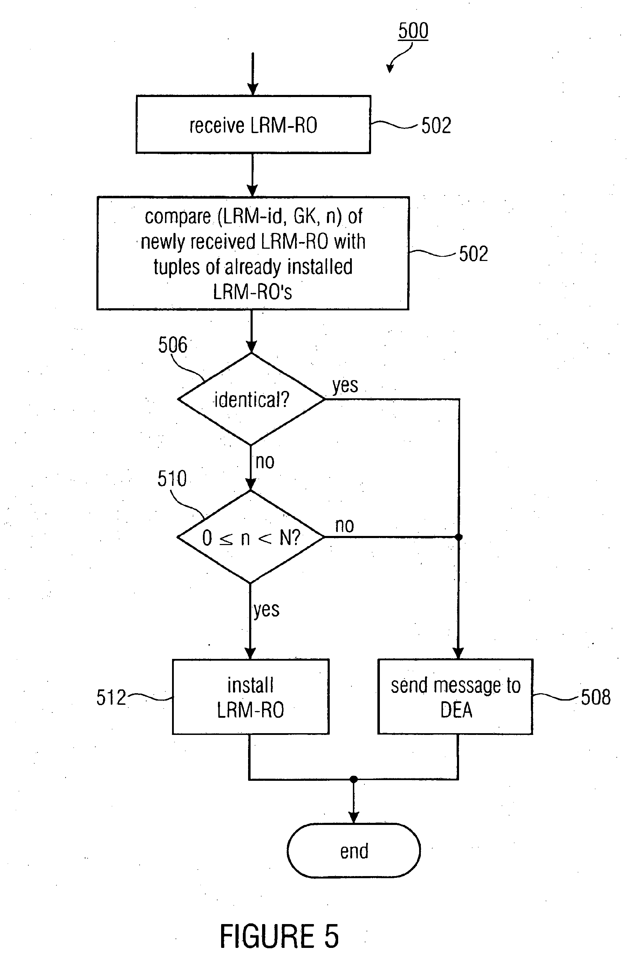

A method executed by the DRM conformant device 400 shall be now explained referring to Fig. 5.

In a first step 502 the DRM conformant device 400 receives a LRM-RO related to an imported DRM content. The LRM-RO comprises information in form of a tuple (LRM-ID, GK, n). This tuple of the newly received LRM-RO is compared with stored tuples of already installed LRM-ROs in a step 504. In step 506 it is checked, whether the tuple of the newly received RO is identical to any of the previously received tuples. If this the case, and the newly received RO is not identical to the previously received RO, an information may be transferred to the DEA 100 in step 508, the information indicating that the LRM 300 has been compromised or manipulated. If the check of step 506 yields that the current tuple is not identical to any of the previously received tuples, method 500 proceeds with step 510, in which it is checked whether n exceeds N. If n does not fall in the window 0 ≤ n < N or 0 < n ≤ N, an information is sent to the DEA 100 in step 508, the information indicating that the LRM 300 has been manipulated. On the other hand, if the check in step 510 yields a reasonable value for n then the received LRM-RO is installed to the DRM conformant device in step 512.

According to an embodiment of the present invention the DRM conformant device 400 takes a role of a guard for surveying the LRM 300. By looking at the tuples comprised by received LRM-ROs, the DRM conformant device 400 may find out whether a manipulation of the LRM 300 has taken place. Hereby it is assumed, that an attacker would try to manipulate the counter n or the upper limit N in the LRM. By checking the whole tuple other manipulations, like for example manipulating the LRM-ID or the GK may also be revealed.

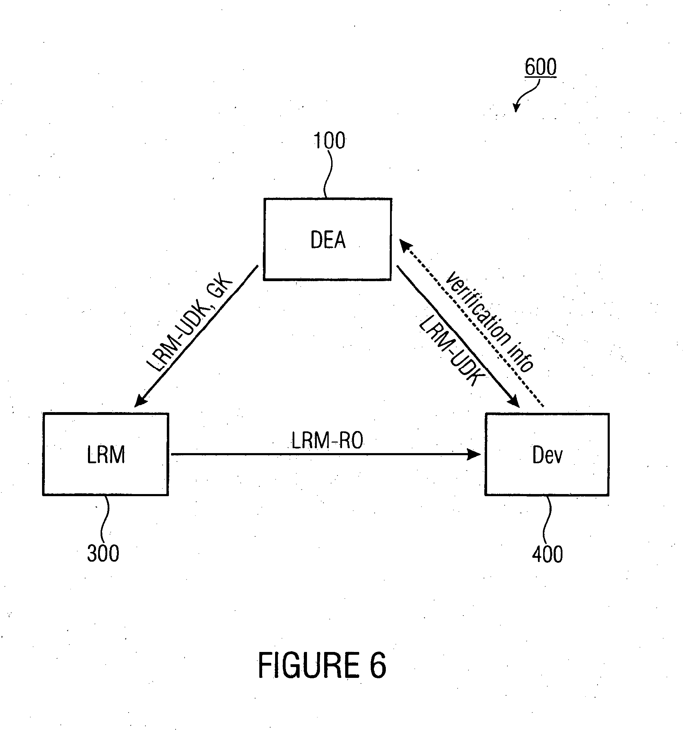

An interaction of the three previously described components, i.e. DEA 100, LRM 300 and DRM conformant device 400, is schematically depicted in Fig. 6.

After having provided the LRM-UDK to both the LRM 300 and the DRM conformant devices 400 the DEA 100 delivers generation key information GK to the LRM 300, on which basis it can generate and deliver LRM-ROs to the DRM conformant devices 400 of the user domain 600. By verifying the tuples (LRM-ID, GK, n) comprised by the LRM-ROs, the DRM conformant devices may verify whether the LRM 300 has been manipulated and send verification information back to the DEA 100 which may then revoke the LRM 300 by not sending out any new GKs for that LRM, thereby limiting the amount of legitimate LRM-ROs the LRM 300 can generate after the revocation by the DEA 100. Once the LRM 300 is revoked, it can at most generate m more legitimate ROs, wherein m is a number of non-used (GK, n) pairs at the time of revocation. Legitimate content created by a compromised LRM before its compromise is revealed, is, however, not affected. A DRM conformant device 400 cannot install LRM-ROs after an LRM revocation (beyond the m legitimate ROs).

LRM-ROs that have been issued to the user domain may be backed up and used regardless of the status of the LRM.

A stand-alone LRM does not have access to the user domain key (UDK) and thus a compromise of the stand-alone LRM does not affect the performance of other devices in the user domain. If a LRM is compromised, the security of other LRMs in the same user domain is not affected since each LRM has a unique LRM-UDK.

The LRM-ROs allow normal functionality within the user domain like ROs generated by a rights issuer. Even if the LRM is compromised, the LRM-ROs are limited to DRM conformant devices that have the LRM-UDK, i.e. to devices that are part of the user domain to which the LRM-UDK is distributed.

The LRM requires only limited connectivity with external network entities, i.e., it only needs to contact the DEA 100 to acquire new GKs. Hence, according to an embodiment of the present invention, the LRM 300 is adapted to request a new GK after it has created at most N LRM-ROs. In response, the DEA 100 transfers a new GK to the LRM 300 in case there is no indication for its compromise.

The DEA 100 remains uninformed about which content is being converted by the LRM 300, safeguarding the user's privacy.

While this invention has been described in terms of several preferred embodiments related to OMA DRM systems, there are alterations, permutations and equivalents within the scope of this invention. It should also been noted that are many alternative ways of implementing the described methods and compositions of the present invention.

Depending on the circumstances, the inventive methods may be implemented in hardware or software. The implementation may be done on a digital storage medium, particularly a disc, CD or DVD with electronically readable control signals, which may cooperate with a programmable computer system such that the respective method is executed. In general, the invention thus also consists in a computer program product with a computer program code stored on a machine-readable carrier for performing the inventive method when the computer program product runs on a computer. In other words, the invention may thus be realized as a computer program with a program code for performing the method when the computer program runs on a computer and/or microcontroller.

## Claims

1. In an OMA DRM domain including a local rights management LRM entity (300) for importing digital media content into the OMA DRM domain, a domain enforcement agent entity (100) for enforcing domain policies and one or more OMA DRM conformant devices (400), wherein the domain enforcement agent entity is adapted to issue the local rights management device and the one or more OMA DRM conformant devices with an LRM-specific user domain key LRM-UDK, a domain enforcement agent entity (100) comprising:
means for receiving a verification information from the DRM conformant devices, the verification information including a previously generated cryptographic generation key GK and an indicator n;
means (102) for deciding, in case the verification information is identical to a previously received verification information or in case the indicator n is greater than or equal to a natural number N associated with said cryptographic generation key GK, that the local rights managing entity (300) has been compromised; and
means (104) for generating (206) a new cryptographic generation key if it has not been determined that the local rights management LRM entity is compromised, and for providing (208) it to the local rights managing entity (300) together with a natural number indicating the amount of local rights managing entity rights objects (LRM-ROs) that may be generated by the local rights managing entity (LRM), the cryptographic generation key GK being encrypted by said user domain key LRM-UDK.

2. The domain enforcement agent entity according to claim 1, wherein the obtained verification information comprises a tuple, the tuple comprising an identifier for the local rights managing entity (300), the cryptographic generation key and an indicator for indicating how many rights objects can still be generated by the local rights managing entity (300) using the cryptographic generation key, and wherein the means (102) for deciding is adapted to compare the tuple with a previously obtained tuple, and to decide that the local rights managing entity (300) cannot be trusted, in case the two tuples are identical.

3. The domain enforcement agent entity according to claim 1, wherein the obtained verification information comprises an indicator for indicating how many rights objects have already been generated by the local rights managing entity (300) using the cryptographic generation key, and wherein the means (102) for deciding is adapted to check whether the indicator indicates more than the limited amount and, in that case, decide that the local rights managing entity (300) cannot be trusted.

4. The domain enforcement agent entity according to one of the preceding claims, wherein the means (104) for providing the cryptographic generation key is adapted to provide the cryptographic generation key together with an identifier related to the local rights managing entity (300) and the natural number specifying the limited amount of rights objects to be generated.

5. The domain enforcement agent entity according to claim 5, wherein the means (104) for providing the cryptographic generation key is adapted to cryptographically sign a tuple, the tuple comprising the identifier related to the local rights managing entity (300), the cryptographic generation key and the natural number specifying the limited amount of rights objects to be generated.

6. In an OMA DRM domain including a local rights management LRM entity (300) for importing digital media content into the OMA DRM domain, a domain enforcement agent entity (100) for enforcing domain policies and one or more OMA DRM conformant devices (400), wherein the domain enforcement agent entity is adapted to issue the local rights management device and the one or more OMA DRM conformant devices with an LRM-specific user domain key LRM-UDK, a cryptographic key management method performed by said domain enforcement agent entity to provide a cryptographic generation key GK to said local rights managing entity (100), the method comprising the steps of:
receiving a verification information from the DRM conformant devices, the verification information including a previously generated cryptographic generation key GK and an indicator n;
in case the verification information is identical to a previously received verification information or in case the indicator n is greater than or equal to a natural number N associated with said cryptographic generation key GK, determining that the local rights managing entity (300) has been compromised;
receiving a request from the local rights management entity for obtaining a new cryptographic generation key; and
if it has not been determined that the local rights management LRM entity is compromised, generating (206) a new cryptographic generation key and providing (208) it to the local rights managing entity (300) together with a natural number indicating the amount of local rights managing entity rights objects (LRM-ROs) that may be generated by the local rights managing entity (LRM), the cryptographic generation key GK being encrypted by said user domain key LRM-UDK.

7. A computer program with a program code for carrying out the steps of the method according to claim 6, when the computer program runs on a computer/and or microcontroller.

8. In an OMA DRM domain including a local rights management LRM entity (300) for importing digital media content into the OMA DRM domain, a domain enforcement agent entity (100) for enforcing domain policies and one or more OMA DRM conformant devices (400), wherein the domain enforcement agent entity is adapted to issue the local rights management device and the one or more OMA DRM conformant devices with an LRM-specific user domain key LRM-UDK, a local rights management LRM entity (300) for generating a rights object related to digital media content performed by said local rights management entity LRM (300), comprising:
a device (306) for
requesting the domain enforcement agent DMA to issue a new cryptographic generation key GK;
receiving a newly generated cryptographic generation key GK together with a natural number N indicating the maximum amount of local rights managing entity rights objects (LRM-ROs) that may be generated by the local rights managing entity (LRM), the cryptographic generation key being encrypted by said user domain key LRM-UDK;
using the cryptographic generation key GK, generating an OMA-compliant rights object LRM-RO containing a protected content encryption key and verification information including the cryptographic generation key GK and an indicator n representing the number of rights objects that have been generated using said cryptographic key GK; and
delivering the OMA compliant rights object LRM-RO to the one or more OMA DRM conformant devices

9. The local rights managing entity according to claim 8, wherein the device (306) for generating is adapted to determine the cryptographic key on the basis of a one-way function, the one-way function being dependent on the cryptographic generation key, the indicator and a cryptographic user domain key being specific for the local rights managing entity (300).

10. The local rights managing entity according to one of claims 8 or 9, wherein the device (306) for generating is adapted to cryptographically sign the generated rights object using a private cryptographic key of the local rights managing entity (300).

11. The local rights managing entity according to one of claims 8 to 10, wherein the local rights managing entity (300) is adapted to convert non-OMA DRM digital media content and/or licenses to OMA-DRM compliant digital media content and/or rights objects.

12. In an OMA DRM domain including a. local rights management LRM entity (300) for importing digital media content into the OMA DRM domain, a domain enforcement agent entity (100) for enforcing domain policies and one or more OMA DRM conformant devices (400), wherein the domain enforcement agent entity is adapted to issue the local rights management device and the one or more OMA DRM conformant devices with an LRM-specific user domain key LRM-UDK, a method for generating a rights object related to digital media content performed by said local rights management entity LRM (300), the method comprising:
requesting the domain enforcement agent DMA to issue a new cryptographic generation key GK;
receiving a newly generated cryptographic generation key GK together with a natural number N indicating the maximum amount of local rights managing entity rights objects (LRM-ROs) that may be generated by the local rights managing entity (LRM), the cryptographic generation key being encrypted by said user domain key LRM-UDK;
using the cryptographic generation key GK, generating an OMA-compliant rights object LRM-RO containing a protected content encryption key and verification information including the cryptographic generation key GK and an indicator n representing the number of rights objects that have been generated using said cryptographic key GK; and
delivering the OMA compliant rights object LRM-RO to the one or more OMA DRM conformant devices.

13. A computer program having a program code, for performing the steps of the method according to claim 12, when the computer program runs on a computer and/or microcontroller.

14. In an OMA DRM domain including a local rights management LRM entity (300) for importing digital media content into the OMA DRM domain, a domain enforcement agent entity (100) for enforcing domain policies and one or more OMA DRM conformant devices (400), wherein the domain enforcement agent entity is adapted to issue the local rights management device and the one or more OMA DRM conformant devices with an LRM-specific user domain key LRM-UDK, a DRM conformant device (400) for replaying encrypted digital content related to a LM-RO, the DRM conformant device comprising:
means for
receiving (502) from the local rights management LRM entity an encrypted OMA compliant rights object LRM-RO based on a content encryption key CEK and comprising said content encryption key CEK and verification information including a cryptographic generation key GK and an indicator n;
transmitting the verification information to the local rights managing LRM entity; and
decrypting the received LRM-RO to obtain the content encryption key CEK for replaying the DRM content.

15. In an OMA DRM domain including a local rights management LRM entity (300) for importing digital media content into the OMA DRM domain, a domain enforcement agent entity (100) for enforcing domain policies and one or more OMA DRM conformant devices (400), wherein the domain enforcement agent entity is adapted to issue the local rights management device and the one or more OMA DRM conformant devices with an LRM-specific user domain key LRM-UDK, a method for replaying encrypted digital content related to a LM-RO, the method being performed by any one of said one or more OMA DRM conformant devices and comprising the steps of:
receiving (502) from the local rights management LRM entity an encrypted OMA compliant rights object LRM-RO based on a content encryption key CEK and comprising said content encryption key CEK and verification information including a cryptographic generation key GK and an indicator n;
transmitting the verification information to the local rights managing LRM entity; and
decrypting the received LRM-RO to obtain the content encryption key CEK for replaying the DRM content.

16. A computer program having a program code for performing the steps of the method according to claim 15, when the computer program runs on a computer and/or microcontroller.

## Patentansprüche

1. In einer OMA-DRM-Domäne mit einer Lokalrechteverwaltungs-LRM-Entität (300) zum Importieren von digitalem Medieninhalt in die OMA-DRM-Domäne, einer Domänendurchsetzungsagent-Entität (100) zum Durchsetzen von Domänenrichtlinien und einer oder mehreren OMA-DRM-konformen Vorrichtungen (400), wobei die Domänendurchsetzungsagent-Entität angepasst ist, um der Lokalrechteverwaltungsvorrichtung und der einen oder den mehreren OMA-DRM-konformen Vorrichtungen einen LRM-spezifischen Benutzerdomänenschlüssel LRM-UDK zu erteilen, eine Domänendurchsetzungsagent-Entität (100), die folgende Merkmale aufweist:
eine Einrichtung zum Empfangen einer Verifizierungsinformation von den DRM-konformen Vorrichtungen, wobei die Verifizierungsinformation einen zuvor erzeugten kryptographischen Erzeugungsschlüssel GK und einen Indikator n beinhaltet;
eine Einrichtung (102) zum Entscheiden, in dem Fall, dass die Verifizierungsinformation identisch zu einer zuvor empfangenen Verifizierungsinformation ist, oder in dem Fall, dass der Indikator n größer oder gleich einer natürlichen Zahl N ist, die dem kryptographischen Erzeugungsschlüssel GK zugeordnet ist, dass die Lokalrechteverwaltungs-Entität (300) kompromittiert wurde; und
eine Einrichtung (104) zum Erzeugen (206) eines neuen kryptographischen Erzeugungsschlüssels, wenn nicht bestimmt wurde, dass die Lokalrechteverwaltungs-LRM-Entität kompromittiert wurde, und zum Bereitstellen (208) desselben an die Lokalrechteverwaltungs-Entität (300) zusammen mit einer natürlichen Zahl, die die Menge von Lokalrechteverwaltungs-Entität-Rechtobjekten (LRM-ROs) anzeigt, die durch die Lokalrechteverwaltungs-Entität (LRM) erzeugt werden können, wobei der kryptographische Erzeugungsschlüssel GK durch den Benutzerdomänenschlüssel LRM-UDK verschlüsselt wird.

2. Die Domänendurchsetzungsagent-Entität gemäß Anspruch 1, bei der die erhaltene Verifizierungsinformation ein Tupel aufweist, wobei das Tupel einen Identifizierer für die Lokalrechteverwaltungs-Entität (300), den kryptographischen Erzeugungsschlüssel und einen Indikator zum Anzeigen, wie viele Rechteobjekte noch durch die Lokalrechteverwaltungs-Entität (300) unter Verwendung des kryptographischen Erzeugungsschlüssels erzeugt werden können, aufweist, und bei der die Einrichtung (102) zum Entscheiden angepasst ist, um das Tupel mit einem zuvor erhaltenen Tupel zu vergleichen, und in dem Fall, dass die beiden Tupel identisch sind, zu entscheiden, dass der Lokalrechteverwaltungs-Entität (300) nicht vertraut werden kann.

3. Die Domänendurchsetzungsagent-Entität gemäß Anspruch 1, bei der die erhaltene Verifizierungsinformation einen Indikator zum Anzeigen, wie viele Rechteobjekte bereits durch die Lokalrechteverwaltungs-Entität (300) unter Verwendung des kryptographischen Erzeugungsschlüssels erzeugt wurden, aufweist, und bei der die Einrichtung (102) zum Entscheiden angepasst ist, um zu prüfen, ob der Indikator mehr als die eingeschränkte Menge anzeigt, und in diesem Fall zu entscheiden, dass der Lokalrechteverwaltungs-Entität (300) nicht vertraut werden kann.

4. Die Domänendurchsetzungsagent-Entität gemäß einem der vorherigen Ansprüche, bei der die Einrichtung (104) zum Bereitstellen des kryptographischen Erzeugungsschlüssels angepasst ist, um den kryptographischen Erzeugungsschlüssel zusammen mit einem Identifizierer in Bezug auf die Lokalrechteverwaltungs-Entität (300) und die natürliche Zahl bereitzustellen, die die eingeschränkte Menge von Rechteobjekten, die erzeugt werden sollen, spezifiziert.

5. Die Domänendurchsetzungsagent-Entität gemäß Anspruch 5, bei der die Einrichtung (104) zum Bereitstellen des kryptographischen Erzeugungsschlüssels angepasst ist, um ein Tupel kryptographisch zu signieren, wobei das Tupel den Identifizierer in Bezug auf die Lokalrechteverwaltungs-Entität (300), den kryptographischen Erzeugungsschlüssel und die natürliche Zahl aufweist, die die eingeschränkte Menge von Rechteobjekten, die erzeugt werden sollen, spezifiziert.

6. In einer OMA-DRM-Domäne mit einer Lokalrechteverwaltungs-LRM-Entität (300) zum Importieren von digitalem Medieninhalt in die OMA-DRM-Domäne, einer Domänendurchsetzungsagent-Entität (100) zum Durchsetzen von Domänenrichtlinien und einer oder mehreren OMA-DRM-konformen Vorrichtungen (400), wobei die Domänendurchsetzungsagent-Entität angepasst ist, um der Lokalrechteverwaltungsvorrichtung und der einen oder den mehreren OMA-DRM-konformen Vorrichtungen einen LRM-spezifischen Benutzerdomänenschlüssel LRM-UDK zu erteilen, ein kryptographisches Schlüsselverwaltungsverfahren, das durch die Domänendurchsetzungsagent-Entität durchgeführt wird, um einen kryptographischen Erzeugungsschlüssel GK an die Lokalrechteverwaltungs-Entität (100) zu liefern, wobei das Verfahren folgende Schritte aufweist:
Empfangen einer Verifizierungsinformation von den DRM-konformen Vorrichtungen, wobei die Verifizierungsinformation einen zuvor erzeugten kryptographischen Erzeugungsschlüssel GK und einen Indikator n beinhaltet;
in dem Fall, dass die Verifizierungsinformation identisch zu einer zuvor empfangenen Verifizierungsinformation ist, oder in dem Fall, dass der Indikator n größer oder gleich einer natürlichen Zahl N ist, die dem kryptographischen Erzeugungsschlüssel GK zugeordnet ist, Bestimmen, dass die Lokalrechteverwaltungs-Entität (300) kompromittiert wurde;
Empfangen einer Anforderung von der Lokalrechteverwaltungs-Entität zum Erhalten eines neuen kryptographischen Erzeugungsschlüssels; und
wenn nicht bestimmt wurde, dass die Lokalrechteverwaltungs-LRM-Entität kompromittiert wurde, Erzeugen (206) eines neuen kryptographischen Erzeugungsschlüssels und Bereitstellen (208) desselben an die Lokalrechteverwaltungs-Entität (300) zusammen mit einer natürlichen Zahl, die die Menge von Lokalrechteverwaltungs-Entität-Rechteobjekten (LRM-ROs) anzeigt, die durch die Lokalrechteverwaltungs-Entität (LRM) erzeugt werden können, wobei der kryptographische Erzeugungsschlüssel GK durch den Benutzerdomänenschlüssel LRM-UDK verschlüsselt wird.

7. Ein Computerprogramm mit einem Programmcode zum Ausführen der Schritte des Verfahrens gemäß Anspruch 6, wenn das Computerprogramm auf einem Computer und/oder einer Mikrosteuerung abläuft.

8. In einer OMA-DRM-Domäne mit einer Lokalrechteverwaltungs-LRM-Entität (300) zum Importieren von digitalem Medieninhalt in die OMA-DRM-Domäne, einer Domänendurchsetzungsagent-Entität (100) zum Durchsetzen von Domänenrichtlinien und einer oder mehreren OMA-DRM-konformen Vorrichtungen (400), wobei die Domänendurchsetzungsagent-Entität angepasst ist, um der Lokalrechteverwaltungsvorrichtung und der einen oder den mehreren OMA-DRM-konformen Vorrichtungen einen LRM-spezifischen Benutzerdomänenschlüssel LRM-UDK zu erteilen, eine Lokalrechteverwaltungs-LRM-Entität (300) zum Erzeugen eines Rechteobjekts in Bezug auf digitalen Medieninhalt, der durch die Lokalrechteverwaltungs-Entität-LRM (300) durchgeführt wird, die folgende Merkmale aufweist:
eine Vorrichtung (306) zum:
Auffordern des Domänendurchsetzungsagenten DMA, einen neuen kryptographischen Erzeugungsschlüssel GK zu erteilen;
Empfangen eines neu erzeugten kryptographischen Erzeugungsschlüssels GK zusammen mit einer natürlichen Zahl N, die die maximale Menge von Lokalrechteverwaltungs-Entität-Rechteobjekten (LRM-ROs) anzeigt, die durch die Lokalrechteverwaltungs-Entität (LRM) erzeugt werden können, wobei der kryptographische Erzeugungsschlüssel durch den Benutzerdomänenschlüssel LRM-UDK verschlüsselt wird;
unter Verwendung des kryptographischen Erzeugungsschlüssels GK, Erzeugen eines OMA-entsprechenden Rechteobjekts LRM-RO, das einen geschützten Inhaltverschlüsselungsschlüssel und eine Verifizierungsinformation beinhaltet, die den kryptographischen Erzeugungsschlüssel GK und einen Indikator n beinhaltet, der die Anzahl von Rechteobjekten darstellt, die unter Verwendung des kryptographischen Schlüssels GK erzeugt wurden; und
Liefern des OMA-entsprechenden Rechteobjekts LRM-RO an die eine oder die mehreren OMA-DRM-konformen Vorrichtungen.

9. Die Lokalrechteverwaltungs-Entität gemäß Anspruch 8, bei der die Vorrichtung (306) zum Erzeugen angepasst ist, um den kryptographischen Schlüssel auf der Basis einer Einwegfunktion zu bestimmen, wobei die Einwegfunktion abhängig von dem kryptographischen Erzeugungsschlüssel, dem Indikator und einem kryptographischen Benutzerdomänenschlüssel ist, der spezifisch für die Lokalrechteverwaltungs-Entität (300) ist.

10. Die Lokalrechteverwaltungs-Entität gemäß einem der Ansprüche 8 oder 9, bei der die Vorrichtung (306) zum Erzeugen angepasst ist, um das erzeugte Rechteobjekt unter Verwendung eines privaten kryptographischen Schlüssels der Lokalrechteverwaltungs-Entität (300) kryptographisch zu signieren.

11. Die Lokalrechteverwaltungs-Entität gemäß einem der Ansprüche 8 bis 10, wobei die Lokalrechteverwaltungs-Entität (300) angepasst ist, um Nicht-OMA-DRM-Digitalmedieninhalt und/oder Lizenzen in OMA-DRM-entsprechenden Digitalmedieninhalt und/oder Rechteobjekte umzuwandeln.

12. In einer OMA-DRM-Domäne mit einer Lokalrechteverwaltungs-LRM-Entität (300) zum Importieren von digitalem Medieninhalt in die OMA-DRM-Domäne, einer Domänendurchsetzungsagent-Entität (100) zum Durchsetzen von Domänenrichtlinien und einer oder mehreren OMA-DRM-konformen Vorrichtungen (400), wobei die Domänendurchsetzungsagent-Entität angepasst ist, um der Lokalrechteverwaltungsvorrichtung und der einen oder den mehreren OMA-DRM-konformen Vorrichtungen einen LRM-spezifischen Benutzerdomänenschlüssel LRM-UDK zu erteilen, ein Verfahren zum Erzeugen eines Rechteobjekts in Bezug auf Digitalmedieninhalt, der durch die Lokalrechteverwaltungs-Entität LRM (300) durchgeführt wird, wobei das Verfahren folgende Schritte aufweist:
Auffordern des Domänendurchsetzungsagenten DMA, einen neuen kryptographischen Erzeugungsschlüssel GK zu erteilen;
Empfangen eines neu erzeugten kryptographischen Erzeugungsschlüssels GK zusammen mit einer natürlichen Zahl N, die die maximale Menge von Lokalrechteverwaltungs-Entität-Rechteobjekten (LRM-ROs) anzeigt, die durch die Lokalrechteverwaltungs-Entität (LRM) erzeugt werden können, wobei der kryptographische Erzeugungsschlüssel durch den Benutzerdomänenschlüssel LRM-UDK verschlüsselt wird;
unter Verwendung des kryptographischen Erzeugungsschlüssels GK, Erzeugen eines OMA-entsprechenden Rechteobjekts LRM-RO, das einen geschützten Inhaltverschlüsselungsschlüssel und eine Verifizierungsinformation beinhaltet, die den kryptographischen Erzeugungsschlüssel GK und einen Indikator n beinhaltet, der die Anzahl von Rechteobjekten darstellt, die unter Verwendung des kryptographischen Schlüssels GK erzeugt wurden; und
Liefern des OMA-entsprechenden Rechteobjekts LRM-RO an die eine oder die mehreren OMA-DRM-konformen Vorrichtungen.

13. Ein Computerprogramm mit einem Programmcode zum Durchführen der Schritte des Verfahrens gemäß Anspruch 12, wenn das Computerprogramm auf einem Computer und/oder einer Mikrosteuerung abläuft.

14. In einer OMA-DRM-Domäne mit einer Lokalrechteverwaltungs-LRM-Entität (300) zum Importieren von digitalem Medieninhalt in die OMA-DRM-Domäne, einer Domänendurchsetzungsagent-Entität (100) zum Durchsetzen von Domänenrichtlinien und einer oder mehreren OMA-DRM-konformen Vorrichtungen (400), wobei die Domänendurchsetzungsagent-Entität angepasst ist, um der Lokalrechteverwaltungsvorrichtung und der einen oder den mehreren OMA-DRM-konformen Vorrichtungen einen LRM-spezifischen Benutzerdomänenschlüssel LRM-UDK zu erteilen, eine DRM-konforme Vorrichtung (400) zum Abspielen von verschlüsseltem Digitalinhalt in Bezug auf ein LM-RO, wobei die DRM-konforme Vorrichtung folgendes Merkmal aufweist:
eine Einrichtung zum:
Empfangen (502), von der Lokalrechteverwaltungs-LRM-Entität, eines verschlüsselten OMA-entsprechenden Rechteobjekts LRM-RO basierend auf einem Inhaltverschlüsselungsschlüssel CEK und mit dem Inhaltverschlüsselungsschlüssel CEK und einer Verifizierungsinformation, die einen kryptographischen Erzeugungsschlüssel GK und einen Indikator n beinhaltet;
Senden der Verifizierungsinformation an die Lokalrechteverwaltungs-LRM-Entität; und
Entschlüsseln des empfangenen LRM-RO, um den Inhaltverschlüsselungsschlüssel CEK zum Abspielen des DRM-Inhalts zu erhalten.

15. In einer OMA-DRM-Domäne mit einer Lokalrechteverwaltungs-LRM-Entität (300) zum Importieren von digitalem Medieninhalt in die OMA-DRM-Domäne, einer Domänendurchsetzungsagent-Entität (100) zum Durchsetzen von Domänenrichtlinien und einer oder mehreren OMA-DRM-konformen Vorrichtungen (400), wobei die Domänendurchsetzungsagent-Entität angepasst ist, um der Lokalrechteverwaltungsvorrichtung und der einen oder den mehreren OMA-DRM-konformen Vorrichtungen einen LRM-spezifischen Benutzerdomänenschlüssel LRM-UDK zu erteilen, ein Verfahren zum Abspielen von verschlüsseltem Digitalinhalt in Bezug auf ein LM-RO, wobei das Verfahren durch eine beliebige der einen oder mehreren OMA-DRM-konformen Vorrichtungen durchgeführt wird und folgende Schritte aufweist:
Empfangen (502), von der Lokalrechteverwaltungs-LRM-Entität, eines verschlüsselten OMA-entsprechenden Rechteobjekts LRM-RO basierend auf einem Inhaltverschlüsselungsschlüssel CEK und mit dem Inhaltverschlüsselungsschlüssel CEK und einer Verifizierungsinformation, die einen kryptographischen Erzeugungsschlüssel GK und einen Indikator n beinhaltet;
Senden der Verifizierungsinformation an die Lokalrechteverwaltungs-LRM-Entität; und
Entschlüsseln des empfangenen LRM-RO, um den Inhaltverschlüsselungsschlüssel CEK zum Abspielen des DRM-Inhalts zu erhalten.

16. Ein Computerprogramm mit einem Programmcode zum Durchführen der Schritte des Verfahrens gemäß Anspruch 15, wenn das Computerprogramm auf einem Computer und/oder einer Mikrosteuerung abläuft.

## Revendications

1. Dans un domaine de DRM OMA comportant une entité LRM de gestion de droits locale (300) pour importer un contenu multimédia numérique dans le domaine de DRM OMA, une entité d'agent d'application de domaine (100) destinée à appliquer les politiques de domaine et un ou plusieurs dispositifs conformes à DRM OMA (400), où l'entité d'agent d'application de domaine est adaptée pour émettre le dispositif de gestion de droits local et les un ou plusieurs dispositifs conformes à DRM OMA avec une clé LRM-UDK du domaine d'utilisateur spécifique à LRM, une entité d'agent d'application de domaine (100) comprenant:
un moyen destiné à recevoir une information de vérification des dispositifs conformes à DRM, l'information de vérification comportant une clé de génération cryptographique GK générée auparavant et un indicateur n;
un moyen (102) destiné à décider, au cas où l'information de vérification est identique à une information de vérification reçue auparavant ou au cas où l'indicateur n est supérieur ou égal à un nombre entier naturel N associé à ladite clé de génération cryptographique GK, que l'entité de gestion de droits locale (300) a été compromise; et
un moyen (104) destiné à générer (206) une nouvelle clé de génération cryptographique s'il n'a pas été déterminé que l'entité LRM de gestion de droits locale est compromise, et à la fournir (208) à l'entité de gestion de droits locale (300) ensemble avec un nombre entier naturel indiquant la quantité d'objets de droits d'entité de gestion de droits locale (LRM-RO) qui peuvent être générés par l'entité de gestion de droits locale (LRM), la clé de génération cryptographique GK étant cryptée par ladite clé LRM-UDK du domaine d'utilisateur.

2. Entité d'agent d'application de domaine selon la revendication 1, dans laquelle l'information de vérification obtenue comprend un tuple, le tuple comprenant un identificateur pour l'entité de gestion de droits locale (300), la clé de génération cryptographique et un indicateur pour indiquer le nombre d'objets de droit qui peuvent encore être générés par l'entité de gestion de droits locale (300) à l'aide de la clé de génération cryptographique, et dans laquelle le moyen (102) destiné à déterminer est adapté pour comparer le tuple avec un tuple obtenu auparavant, et à décider que l'entité de gestion de droits locale (300) n'est pas fiable au cas où les deux tuples sont identiques.

3. Entité d'agent d'application de domaine selon la revendication 1, dans laquelle l'information de vérification obtenue comprend un indicateur pour indiquer le nombre d'objets de droits qui ont déjà été générés par l'entité de gestion de droits locale (300) à l'aide de la clé de génération cryptographique, et dans laquelle le moyen (102) destiné à décider est adapté pour vérifier si l'indicateur indique plus de la quantité limitée et, dans ce cas, décider que l'entité de gestion de droits locale (300) n'est pas fiable.

4. Entité d'agent d'application de domaine selon l'une des revendications précédentes, dans laquelle le moyen (104) destiné à fournir la clé de génération cryptographique est adapté pour fournir la clé de génération cryptographique ensemble avec un identificateur relatif à l'entité de gestion de droits locale (300) et le nombre entier naturel spécifiant la quantité limitée d'objets de droits à générer.

5. Entité d'agent d'application de domaine selon la revendication 5, dans laquelle le moyen (104) destiné à fournir la clé de génération cryptographique est adapté pour signer de manière cryptographique un tuple, le tuple comprenant l'identificateur relatif à l'entité de gestion de droits locale (300), la clé de génération cryptographique et le nombre entier naturel spécifiant la quantité limitée d'objets de droits à générer.

6. Dans un domaine de DRM OMA comportant une entité LRM de gestion de droits locale (300) pour importer un contenu multimédia numérique dans le domaine de DRM OMA, une entité d'agent d'application de domaine (100) destinée à appliquer les politiques de domaine et un ou plusieurs dispositifs conformes à DRM OMA (400), où l'entité d'agent d'application de domaine est adapté pour émettre le dispositif de gestion de droits local et les un ou plusieurs dispositifs conformes à DRM OMA avec une clé LRM-UDK du domaine d'utilisateur spécifique à LRM, un procédé de gestion de clé cryptographique réalisé par ladite entité d'agent d'application de domaine pour fournir une clé de génération cryptographique GK à ladite entité de gestion de droits locale (100), le procédé comprenant les étapes consistant à:
recevoir une information de vérification des dispositifs conformes à DRM, l'information de vérification comportant une clé de génération cryptographique GK générée auparavant et un indicateur n;
au cas où l'information de vérification est identique à une information de vérification reçue auparavant ou au cas où l'indicateur n est supérieur ou égal à un nombre entier naturel N associé à ladite clé de génération cryptographique GK, déterminer que l'entité de gestion de droits locale (300) a été compromise;
recevoir une demande de l'entité de gestion de droits locale d'obtenir une nouvelle clé de génération cryptographique; et
s'il n'a pas été déterminé que l'entité LRM de gestion de droits locale est compromise, générer (206) une nouvelle clé de génération cryptographique et la fournir (208) à l'entité de gestion de droits locale (300) ensemble avec un nombre entier naturel indiquant la quantité d'objets de droits d'entité de gestion de droits locale (LRM-RO) qui peuvent être générés par l'entité de gestion de droits locale (LRM), la clé de génération cryptographique GK étant cryptée par ladite clé LRM-UDK du domaine d'utilisateur.

7. Programme d'ordinateur avec un code de programme pour réaliser les étapes du procédé selon la revendication 6 lorsque le programme d'ordinateur est exécuté sur un ordinateur et/ou un microcontrôleur.

8. Dans un domaine de DRM OMA comportant une entité LRM de gestion de droits locale (300) pour importer un contenu multimédia numérique dans le domaine de DRM OMA, une entité d'agent d'application de domaine (100) destinée à appliquer les politiques de domaine et un ou plusieurs dispositifs conformes à DRM OMA (400), où l'entité d'agent d'application de domaine est adaptée pour émettre le dispositif de gestion de droits local et les un ou plusieurs dispositifs conformes à DRM OMA avec une clé LRM-UDK du domaine d'utilisateur spécifique à LRM, une entité LRM de gestion de droits locale (300) destinée à générer un objet de droits relatif au contenu multimédia numérique réalisé par ladite entité de gestion de droits locale LRM (300), comprenant:
un dispositif (306) destiné à
demander que l'agent d'application de domaine DMA émette une nouvelle clé de génération cryptographique GK;
recevoir une nouvelle clé de génération cryptographique GK générée ensemble avec un nombre entier naturel N indiquant la quantité maximale d'objets de droits d'entité de gestion de droits locale (LRM-RO) qui peuvent être générés par l'entité de gestion de droits locale (LRM), la clé de génération cryptographique étant cryptée par ladite clé LRMUDK du domaine d'utilisateur;
à l'aide de la clé de génération cryptographique GK, générer un objet de droits LRM-RO conforme à OMA contenant une clé de cryptage de contenu protégée et l'information de vérification comportant la clé de génération cryptographique GK et un indicateur n représentant le nombre d'objets de droit qui ont été générés à l'aide de ladite clé cryptographique GK; et
délivrer l'objet de droits LRM-RO conforme à OMA aux un ou plusieurs dispositifs conformes à DRM OMA.

9. Entité de gestion de droits locale selon la revendication 8, dans laquelle le dispositif (306) destiné à générer est adapté pour déterminer la clé cryptographique sur base d'une fonction à sens unique, la fonction à sens unique dépendant de la clé de génération cryptographique, l'indicateur et une clé cryptographique du domaine d'utilisateur étant spécifiques à l'entité de gestion de droits locale (300).

10. Entité de gestion de droits locale selon l'une des revendications 8 ou 9, dans laquelle le dispositif (306) destiné à générer est adapté pour signer de manière cryptographique l'objet de droits généré à l'aide d'une clé cryptographique privée de l'entité de gestion de droits locale (300).

11. Entité de gestion de droits locale selon l'une des revendications 8 à 10, dans laquelle l'entité de gestion de droits locale (300) est adaptée pour convertir le contenu multimédia numérique de DRM non OMA et/ou les licences en un contenu multimédia numérique conforme à DRM OMA et/ou objets de droits.

12. Dans un domaine de DRM OMA comportant une entité LRM de gestion de droits locale (300) pour importer un contenu multimédia numérique dans le domaine DRM OMA, une entité d'agent d'application de domaine (100) destinée à appliquer les politiques de domaine et un ou plusieurs dispositifs conformes à DRM OMA (400), où l'entité d'agent d'application de domaine est adaptée pour émettre le dispositif de gestion de droits local et les un ou plusieurs dispositifs conformes à DRM OMA avec une clé LRM-UDK du domaine d'utilisateur spécifique à LRM, un procédé pour générer un objet de droits relatif au contenu multimédia numérique réalisé par ladite entité de gestion de droits locale LRM (300), le procédé comprenant le fait de:
demander que l'agent d'application de domaine DMA émette une nouvelle clé de génération cryptographique GK;
recevoir une nouvelle clé de génération cryptographique GK générée ensemble avec un nombre entier naturel N indiquant la quantité maximale d'objets de droits d'entité de gestion de droits locale (LRM-RO) qui peuvent être générés par l'entité de gestion de droits locale (LRM), la clé de génération cryptographique étant cryptée par ladite clé LRM-UDK du domaine d'utilisateur;
à l'aide de la clé de génération cryptographique GK, générer un objet de droits LRM-RO conforme à OMA contenant une clé de cryptage de contenu protégée et l'information de vérification comportant la clé de génération cryptographique GK et un indicateur n représentant le nombre d'objets de droit qui ont été générés à l'aide de ladite clé cryptographique GK; et
délivrer l'objet de droits LRM-RO conforme à OMA aux un ou plusieurs dispositifs conformes à DRM OMA.

13. Programme d'ordinateur présentant un code de programme pour réaliser les étapes du procédé selon la revendication 12 lorsque le programme d'ordinateur est exécuté sur un ordinateur et/ou un microcontrôleur.

14. Dans un domaine de DRM OMA comportant une entité LRM de gestion de droits locale (300) pour importer un contenu multimédia numérique dans le domaine DRM OMA, une entité d'agent d'application de domaine (100) destinée à appliquer les politiques de domaine et un ou plusieurs dispositifs conformes à DRM OMA (400), où l'entité d'agent d'application de domaine est adaptée pour émettre le dispositif de gestion de droits local et les un ou plusieurs dispositifs conformes à DRM OMA avec une clé LRM-UDK du domaine d'utilisateur spécifique à LRM, un dispositif (400) conforme à DRM pour reproduire un contenu numérique crypté relatif à un LM-RO, le dispositif conforme à DRM comprenant:
un moyen destiné à
recevoir (502) de l'entité LRM de gestion des droits locale un objet de droits LRM-RO conforme à OMA crypté sur base d'une clé de cryptage de contenu CEK et comprenant ladite clé de cryptage de contenu CEK et l'information de vérification comportant une clé de génération cryptographique GK et un indicateur n;
transmettre l'information de vérification à l'entité LRM de gestion de droits locale; et
décrypter le LRM-RO reçu, pour obtenir la clé de cryptage de contenu CEK pour reproduire le contenu de DRM.

15. Dans un domaine de DRM OMA comportant une entité LRM de gestion de droits locale (300) pour importer un contenu multimédia numérique dans le domaine de DRM OMA, une entité d'agent d'application de domaine (100) destinée à appliquer les politiques de domaine et un ou plusieurs dispositifs conformes à DRM OMA (400), où l'entité d'agent d'application de domaine est adaptée pour émettre le dispositif de gestion de droits local et les un ou plusieurs dispositifs conformes à DRM OMA avec une clé LRM-UDK du domaine d'utilisateur spécifique à LRM, un procédé pour reproduire un contenu numérique crypté relatif à un LM-RO, le procédé étant réalisé par l'un quelconque desdits un ou plusieurs dispositifs conformes à DRM OMA et comprenant les étapes consistant à:
recevoir (502) de l'entité LRM de gestion de droits locale un objet de droits LRM-RO conforme à OMA crypté sur base d'une clé de cryptage de contenu CEK et comprenant ladite clé de cryptage de contenu CEK et l'information de vérification comprenant une clé de génération cryptographique GK et un indicateur n
transmettre l'information de vérification à l'entité LRM de gestion de droits locale; et
décrypter le LRM-RO reçu, pour obtenir la clé de cryptage de contenu CEK pour reproduire le contenu de DRM.

16. Programme d'ordinateur présentant un code de programme pour réaliser les étapes du procédé selon la revendication 15 lorsque le programme d'ordinateur est exécuté sur un ordinateur et/ou un microcontrôleur.
